# FASCICULE DE BREVET EUROPEEN

(11) **EP 1 427 506 B1**
(45) Date de publication et mention de la délivrance du brevet: **24.05.2006**
(21) Numéro de dépôt: 02785495.9
(22) Date de dépôt: 12.09.2002
(51) Int. Cl.: B01D 36/00, B01D 35/18

(54) **DISPOSITIF DE FILTRATION A ENSEMBLE DE PURGE AMELIORE ET LIGNE D'ALIMENTATION EN GAZOLE COMPORTANT UN TEL DISPOSITIF**
FILTRIERVORRICHTUNG MIT VERBESSERTER ABLASSANORDNUNG UND DIESE UMFASSENDE DIESELKRAFTSTOFFZUFUHRLEITUNG
FILTERING DEVICE WITH ENHANCED BLEEDING ASSEMBLY AND DIESEL FUEL SUPPLY LINE COMPRISING SAME

(30) Priorité: 19.09.2001 FR 0112109
(43) Date de publication de la demande: 16.06.2004
(73) Titulaire: Delphi Technologies, Inc., Troy, MI 48098 (US)
(72) Inventeur: DECAUX, Daniel, Henri, F-41000 Blois (FR)
(74) Mandataire: Blot, Philippe Robert Emile
(86) Numéro de dépôt international: PCT/FR2002/003115
(87) Numéro de publication internationale: WO 2003/035217

(56) Documents cités:
- FR-A- 2 698 411
- GB-A- 157 669
- US-A- 4 491 120
- US-A- 5 698 098
- US-A- 5 855 772

## Description

La présente invention concerne un dispositif de filtration à ensemble de purge amélioré, du type défini dans le préambule de la revendication 1.

Elle s'applique préférentiellement au domaine de la filtration du gazole, notamment pour des lignes basse pression d'alimentation en gazole de moteurs diesel, par exemple de véhicules ou de machines.

De tels dispositifs sont destinés à séparer d'un mélange liquide ou gazeux une impureté liquide, qui s'accumule progressivement dans une cuvette de collecte.

Dans le cas du gazole, ces dispositifs permettent de séparer du gazole l'eau que le gazole contient en émulsion. Cette eau est séparée du gazole par des moyens de filtration adaptés, tels qu'une grille et/ou un papier filtre, et s'accumule par gravité dans une cuvette inférieure de collecte.

Pour le bon fonctionnement du dispositif, il est nécessaire de purger périodiquement le liquide résiduaire. A cet effet, un orifice d'évacuation du liquide est ménagé dans la paroi de la cuvette de collecte et pourvu généralement d'un bouchon vissé de façon étanche ; de même, un orifice obturable de mise à l'air libre est ménagé dans la paroi du carter, généralement dans sa partie supérieure. La purge ne peut s'effectuer que lorsque les deux orifices sont dégagés, car, comme il est bien connu, il est nécessaire de remplacer par un fluide, par exemple de l'air extérieur, le liquide que l'on chasse de l'intérieur d'un récipient étanche, sous l'effet de la gravité.

Dans certains dispositifs, l'orifice de mise à l'air est adapté pour être obturé par un bouchon vissé de façon étanche, la purge gravitaire étant alors provoquée par le dévissage des deux bouchons.

Pour d'autres dispositifs, comme celui décrit dans GB 157 669, l'orifice de mise à l'air est formé par un orifice utilisé pour l'entraînement, en aval du carter, du gazole filtré, cet orifice étant, en dehors des périodes de purge, raccordé de manière étanche à par exemple une conduite de sortie du gazole filtré. De plus, le dispositif décrit dans GB 157 669 comporte un clapet d'obturation d'un orifice d'alimentation en gazole à filtrer, actionnable par l'intermédiaire du bouchon vissé d'obturation de l'orifice d'évacuation du liquide résiduaire, de sorte que le dégagement de l'un des orifices d'évacuation et d'alimentation provoque simultanément l'obturation de l'autre de ces orifices, et vice versa.

Dans tous les cas, ces dispositifs présentent donc l'inconvénient d'une double manipulation pour en effectuer la purge. Pour un dispositif de filtration de gazole intégré à une ligne d'alimentation en gazole d'un moteur diesel, cet inconvénient est d'autant plus marqué que l'encombrement de la zone d'implantation de cette ligne rend souvent difficile d'accès le carter de filtre.

De plus, pour assurer une bonne étanchéité du carter en dehors de l'opération de purge, il est nécessaire de munir chaque organe d'obturation manipulé d'une garniture étanche résistant à des sollicitations répétées. Par exemple, chaque bouchon vissé doit être pourvu d'une rondelle plate, qui présente toujours le risque d'être oubliée, mal montée ou de s'user prématurément en raison de son exposition à l'environnement extérieur.

Les opérations de purge sont rendues plus faciles et plus rapides par des dispositifs de filtration, dans lesquels les orifices d'entrée d'air dans le carter et d'évacuation du liquide à purger sont dégagés en ne manipulant qu'un seul organe de commande, comme dans les dispositifs proposés dans US-A-5,698,098. Le document précité envisage d'intégrer un obturateur bi-partite, c'est-à-dire incluant deux éléments respectivement associés à l'orifice de mise à l'air libre et à l'orifice d'évacuation du liquide purgé, ces deux éléments étant liés mécaniquement pour permettre l'entraînement de l'un lors de la sollicitation de l'autre par l'utilisateur. Ce document envisage en variante de prévoir un obturateur unique de forme globalement tubulaire dont la partie haute forme un couvercle vissé autour de l'extrémité supérieure ouverte du carter, tandis que la partie basse peut boucher l'orifice d'évacuation du liquide, à condition que celui-ci débouche transversalement dans le carter.

Le but de la présente invention est de proposer un dispositif du type précité qui permette une opération de purge facilitée et rapide, qui minimise les risques de dysfonctionnement ultérieurs du dispositif de filtration et qui, sans nuire à l'étanchéité du carter en dehors des opérations de purge, limite les contraintes de conception du carter vis-à-vis de l'obturateur de commande de purge.

A cet effet, l'invention a pour objet un dispositif du type précité et qui présente les caractéristiques de la partie caractérisante de la revendication 1.

D'autres caractéristiques de ce dispositif, prises isolément ou selon toutes les combinaisons techniquement possibles, sont énoncées dans les revendications dépendantes 2 à 26. L'invention a également pour objet une ligne d'alimentation en gazole, notamment d'un moteur diesel, présentant les caractéristiques de la revendication 27.

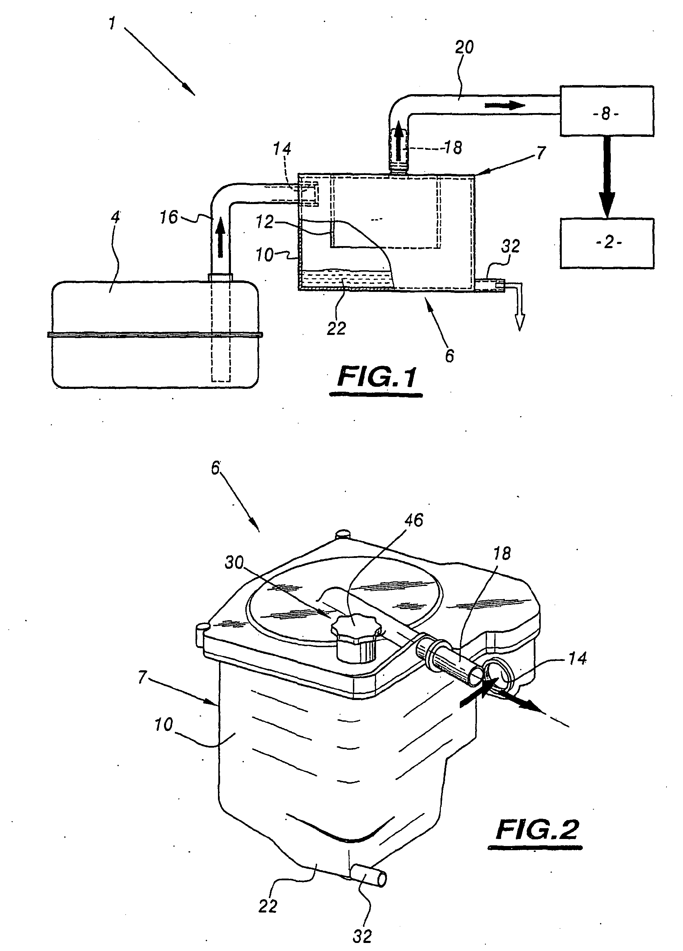

L'invention sera mieux comprise à la lecture de la description qui va suivre, donnée uniquement à titre d'exemple, et faite en se référant aux dessins sur lesquels : - la figure 1 est une vue schématique d'une ligne d'alimentation en gazole selon l'invention ;
- la figure 2 est une vue en perspective d'un dispositif de filtration de gazole selon l'invention ;
- les figures 3 et 4 sont des vues partielles en coupe longitudinale de l'ensemble de purge du dispositif de la figure 2, cet ensemble étant en position d'étanchéité sur la figure 3 et en position de purge sur la figure 4 ;
- la figure 5 est une vue en perspective d'une variante du dispositif de filtration de gazole selon l'invention ;
- la figure 6 est une vue de face de l'ensemble de chauffage du dispositif de la figure 5 ;
- la figure 7 est une vue en perspective, sous le même angle que celle de la figure 2, de l'ensemble de filtrage du dispositif de la figure 5;
- la figure 8 est une vue analogue à celle de la figure 6, d'une variante de l'ensemble de chauffage selon l'invention ;
- la figure 9 est une vue en coupe selon le plan IX-IX indiqué sur la figure 8 ; et
- la figure 10 est une vue selon la flèche X indiquée sur la figure 8.

Sur la figure 1 est représentée une ligne 1 d'alimentation en gazole d'un moteur diesel 2. La ligne 1 est une ligne basse pression, c'est-à-dire que le gazole se déplace dans cette ligne, comme indiqué par les flèches, en raison d'une dépression à son extrémité aval par rapport à son extrémité amont. La ligne 1 comporte, d'amont en aval, un réservoir à gazole 4, un dispositif 6 de filtration du gazole, et une pompe à gazole 8.

A l'exception du dispositif 6 qui sera détaillé ci-après, le réservoir 4 et la pompe 10 sont des éléments connus en eux-mêmes et ne seront pas détaillés plus avant.

Le dispositif 6 comporte, pour le mode de réalisation représenté sur les figures 1 à 4, un ensemble 7 de filtrage du gazole afin d'en retirer l'eau en émulsion. Comme représenté sur les figures 1 et 2, l'ensemble de filtrage 7 comporte un carter 10, par exemple en matière plastique et de forme générale sensiblement parallélépipédique. Le carter 10 délimite intérieurement une chambre de filtrage dans laquelle sont agencés de façon connue des moyens de filtration 12 adaptés pour retenir l'eau en émulsion dans le gazole. Ces moyens de filtration, schématiquement esquissés sur la figure 1, sont par exemple constitués d'une grille à pores de taille déterminée et/ou de papier filtre qui retiennent et évacuent vers leur partie inférieure l'eau dont est chargé le gazole qui les traverse. A cet effet, le carter 10 de l'ensemble 7 comporte, d'une part, un orifice 14 d'entrée du gazole chargé en eau, raccordé au réservoir 4, via un raccord 16, et, d'autre part, un conduit 18 de sortie du gazole sensiblement exempt d'eau, raccordé à la pompe 8, via un raccord 20.

L'ensemble 7 comporte également une cuvette 22 de collecte de l'eau séparée du gazole par les moyens 12. Cette cuvette est ménagée dans la partie inférieure du carter 10 et présente une grande capacité de stockage de l'eau qu'il est nécessaire de purger périodiquement

A cet effet, le dispositif 6 comporte un ensemble de purge 30 à même de permettre à l'eau contenue dans la cuvette 22 d'emprunter librement un conduit d'écoulement 32, solidaire de la partie basse du carter 10.

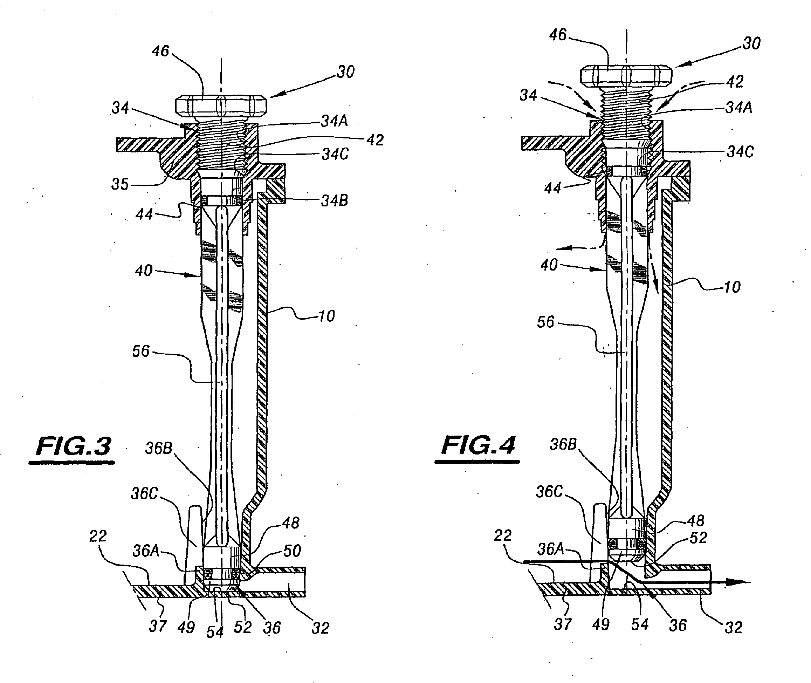

Plus précisément, et comme représenté en détail sur les figures 3 et 4, l'ensemble de purge 30 comprend un premier orifice 34 de mise à l'air libre ménagé dans la paroi supérieure 35 du carter 10. Cet orifice est de forme générale cylindrique d'axe sensiblement vertical. Il est délimité par une partie supérieure 34A filetée, une partie inférieure 34B sensiblement lisse et un épaulement intermédiaire 34C, le diamètre de la partie inférieure étant légèrement plus petit que celui de la partie supérieure.

L'ensemble de purge 30 comprend un second orifice 36 ménagé dans la paroi inférieure 37 du carter 10, sensiblement à l'aplomb de l'extrémité amont du conduit d'écoulement 32. Cet orifice 36 est positionné sensiblement en regard du premier orifice 34, voire, comme représenté sur les figures, de façon co-axiale. L'orifice 36 est délimité une partie inférieure 36A sensiblement cylindrique et lisse, de diamètre plus petit que celui de la partie inférieure 34B du premier orifice 34 et une partie supérieure 36B sensiblement tronconique, de diamètre décroissant vers le bas, dans laquelle est ménagée au moins une échancrure 36C pour permettre le raccordement de l'orifice 34 à la cuvette 26 à un niveau le plus bas possible.

L'ensemble de purge 30 comprend également une tige 40 formant un obturateur des orifices 34 et 36. La tige 40 est déplaçable suivant un mouvement de translation sensiblement vertical entre une position basse où elle assure l'étanchéité du carter 10, comme représenté sur la figure 3, et une position haute où elle permet la purge gravitaire de la cuvette 22, comme représenté sur la figure 4.

La tige 40 comporte une partie supérieure 42, partiellement filetée de façon à coopérer avec la partie filetée 34A de l'orifice 34. Elle comporte, également dans sa partie supérieure, une gorge annulaire pourvue d'un joint torique 44 adapté pour être pressé contre la surface cylindrique 34B de l'orifice 34 lorsque la tige 40 est en position d'étanchéité, et pour se positionner sans être pressé au niveau de l'épaulement 34C de l'orifice 34 lorsque la tige est en position de purge. La partie supérieure de la tige 40 forme ainsi un bouchon étanche pour l'orifice 34 lorsque la tige est en position d'étanchéité et permet l'entrée d'air à pression atmosphérique dans le carter par l'orifice 34, suivant les flèches en traits mixtes, lorsqu'elle est en position de purge.

La tige 40 comporte en outre à son extrémité supérieure une tête 46 facilitant sa préhension lors des manoeuvres de vissage-dévissage. Cette tête 46 est avantageusement agencée par rapport au carter de façon à pouvoir être facilement manoeuvrée, notamment en prenant en compte l'encombrement de la zone dans laquelle est agencée la ligne 1 de la figure 1.

La tige 40 comporte une partie d'extrémité inférieure 48 de forme générale cylindrique et terminée par un chanfrein 49, sensiblement tronconique, dont les surfaces latérales sont par exemple sensiblement complémentaires de la surface de la partie sensiblement tronconique 36B de l'orifice 36 du carter 10. La partie 48 de la tige comporte également une gorge annulaire pourvue d'un joint torique 50 de diamètre plus petit que celui du joint 44. Ce joint 50 est adapté pour être pressé contre la surface cylindrique 36A de l'orifice 36 lorsque la tige est en position d'étanchéité et pour dégager l'échancrure 36C lorsque la tige est en position de purge. La partie inférieure 48 de la tige 40 forme ainsi un bouchon étanche pour l'orifice 36 lorsque la tige est en position d'étanchéité et permet l'évacuation de l'eau dans le conduit 32 par l'orifice 36, suivant la flèche en trait plein indiquée sur la figure 4, lorsqu'elle est en position de purge.

La tige 40 comporte de plus une face d'extrémité inférieure 52 sensiblement plate et adaptée pour prendre appui fermement sur une partie de paroi 54 solidaire du carter 10 et agencée à l'extrémité amont du conduit 32.

Par ailleurs, la tige 40 comporte une partie courante 56 sous forme d'un croisillon plein de section transversale plus petite que celle du reste de la tige. Cette structure est suffisamment flexible transversalement pour rattraper un éventuel jeu dû à un défaut d'alignement des axes respectifs des orifices 34 et 36. Un tel rattrapage est également envisageable au moyen d'un matériau souple constituant la partie courante 56.

Le fonctionnement du dispositif de filtration selon l'invention est le suivant.

En service, c'est-à-dire lorsque le dispositif 6 assure, par l'intermédiaire de son ensemble de filtrage 7, le filtrage en eau du gazole circulant dans la ligne basse pression 1 de la figure 1, l'eau est collectée dans la cuvette 22. La tige 40 occupe la position de la figure 3, et assure la bonne étanchéité du carter au niveau des orifices 34 et 36 au moyen des joints d'étanchéité 44 et 50, pressés contre leurs surfaces respectives d'étanchéité 34B et 36A.

Lors de l'opération de purge du dispositif 6, la tige 40 est dévissée d'un nombre de tours suffisant, par exemple trois, au moyen de sa tête 46, de sorte que, globalement, elle se déplace suivant un mouvement de translation vers le haut pour atteindre sa position de purge de la figure 4. Dans cette position, le joint supérieur 44 n'est plus pressé contre une surface d'étanchéité de sorte que l'air peut pénétrer librement à l'intérieur du carter 10 au travers de l'orifice 34. De même, la partie inférieure 48 de la tige libère l'orifice inférieur 36 par lequel l'eau est évacuée librement dans le conduit 32, sous l'effet de la gravité.

Une fois la purge terminée, la tige 40 est revissée dans à sa position d'étanchéité. Sa partie inférieure 48 est alors guidée en translation par la partie tronconique 36B de l'orifice 36, tandis que sa partie supérieure 42 positionne le joint 44 en contact étanche avec la partie 34B de l'orifice 34. En poursuivant le revissage de la tige 40, le joint inférieur 50 est ensuite positionné en contact étanche contre la surface 36A de l'orifice 36 et la tranche d'extrémité inférieure 52 de la tige prend fermement appui sur la partie de paroi 54.

Ainsi, le dispositif de filtration selon l'invention permet d'effectuer facilement et rapidement la purge gravitaire du carter de filtre. L'opération de purge ne nécessite en effet que la seule manipulation d'un unique obturateur, au lieu de deux pour les dispositifs relevant de l'art antérieur.

De plus, l'ensemble de purge du dispositif selon l'invention ne nécessite pas de pièces d'étanchéité rapportées en fin d'opération de purge, telle qu'une rondelle, puisque les joints 44 et 50 sont agencés à demeure sur l'obturateur 40.

Par ailleurs, une même tige 40 peut être utilisée avec plusieurs carters 10 successifs, notamment dès que ceux-ci sont changés pour des raisons de saturation ou d'usure des moyens de filtration 12. En effet, en dévissant entièrement le tronçon fileté 42 de la partie taraudée associée 34A de l'orifice 34, la tige 40 peut être intégralement retirée du carter, les diamètres de sa partie inférieure et du joint 50 étant plus petits que celui de la partie cylindrique 34B de l'orifice 34. La tige 40 est ensuite introduite dans un carter de filtre neuf, sa partie inférieure étant guidée lors de sa course d'introduction par la coopération de son chanfrein d'extrémité inférieure 49 avec la partie tronconique 36B de l'orifice 36.

En outre, il n'est pas nécessaire de fabriquer le carter 10 sous de fortes contraintes géométriques, une certaine dispersion des caractéristiques géométriques du carter étant absorbée par l'ensemble de purge 30. D'une part, d'éventuels écarts transversaux liés aux orifices 34 et 36 ménagés dans le carter, par exemple dus à un défaut d'alignement des axes de ces orifices, sont rattrapés à la fois par la partie courante souple 56 de la tige 40 et par le contact ferme de la tranche d'extrémité 52 sur la partie de paroi du carter 54. D'autre part, d'éventuels écarts verticaux entre les parois supérieure 35 et inférieure 37 du carter 10 sont rendus admissibles par un surdimensionnement adéquat en longueur de chacune des surfaces d'étanchéité 34B et 36A.

Divers aménagements de l'ensemble de purge sont envisageables sans sortir du cadre de l'invention. Ainsi, à titre de variante, le déplacement de la tige 40 de sa position d'étanchéité à sa position de purge peut être assuré par d'autres types de liaison que celui d'une liaison à filet. De même, la tête de manoeuvre 46 de la tige 40 n'est pas nécessairement agencée à son extrémité supérieure, mais peut l'être à son extrémité inférieure.

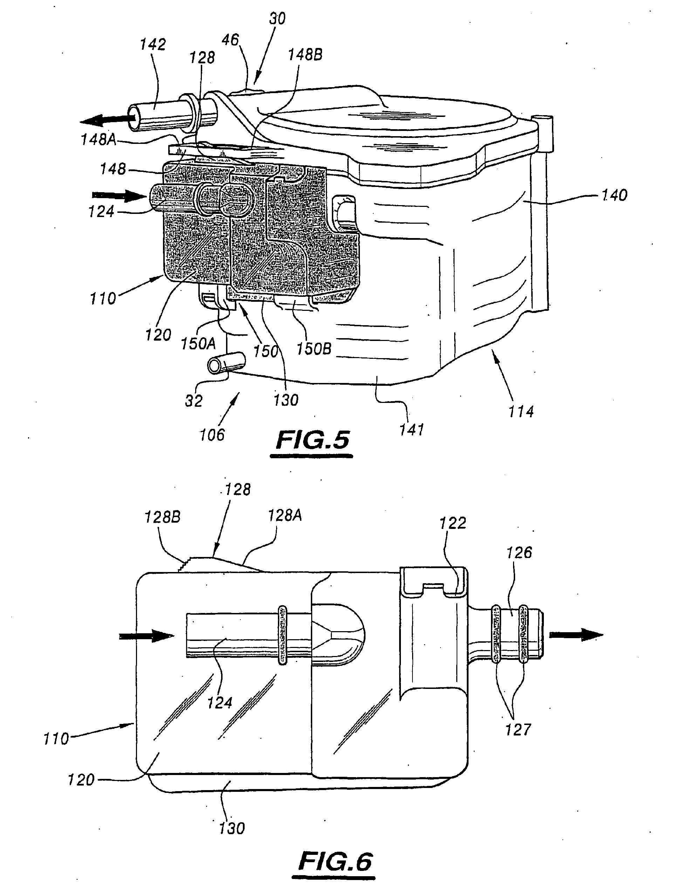

Sur les figures 5 à 10 est représenté un dispositif 106 de filtration de gazole selon l'invention, variante de celui des figures 1 à 4. Ce dispositif 106 se distingue essentiellement de celui des figures 1 à 4 par le fait qu'il comporte, en plus d'un ensemble de filtrage 114 de fonction sensiblement analogue à l'ensemble 7 des figures 1 à 4, un ensemble 110 de chauffage électrique du gazole à filtrer, grisé par rapport à l'ensemble de chauffage 114 sur la figure 5, et adapté pour fluidifier le gazole lors de son utilisation à froid.

L'ensemble de filtrage 114 est pourvu d'un ensemble de purge 30 selon l'invention, analogue à celui des figures 2 à 4. Cet ensemble de purge est pointé sur les figures 5 à 7 par les mêmes références que celles des figures 2 à 4, et ne sera donc pas détaillé de nouveau en regard de ces figures.

Comme indiqué par les flèches sur la figure 5, l'ensemble de chauffage 110 est disposé en amont, suivant le déplacement du gazole dans le dispositif, de l'ensemble de filtrage 114, de sorte que le dispositif 106 est adapté pour être agencé dans une ligne d'alimentation en gazole d'un moteur diesel, par exemple en aval d'un réservoir et en amont d'une pompe à gazole alimentant ce moteur.

L'ensemble de chauffage 110 comporte, comme représenté plus en détail sur la figure 6, un carter 120 de forme générale sensiblement parallélépipédique et délimitant intérieurement une chambre, non visible sur les figures, de chauffage du gazole. A cet effet, l'ensemble 110 comporte intérieurement un ou plusieurs éléments chauffant électriques. Ces éléments, connus en eux-mêmes, sont agencés dans la chambre de chauffage et reliés électriquement à un connecteur électrique 122. Ce connecteur est agencé sur le carter 120 et destiné à recevoir un câble d'alimentation électrique, par exemple connecté à une batterie d'accumulateurs.

L'ensemble 110 comporte extérieurement un manchon 124 d'entrée du gazole à chauffer à l'intérieur de la chambre de chauffage et un manchon 126 de sortie de gazole chauffé, sur lequel sont agencés deux joints toriques d'étanchéité 127. Ces manchons s'étendent suivant la direction longitudinale du carter 120, ce dernier étant par exemple constitué de matière plastique rigide et les manchons d'entrée 124 et de sortie 126 étant moulés d'un seul tenant avec le carter 120.

De plus, le carter 120 possède des caractéristiques extérieures remarquables, qui seront justifiées ci-après. D'abord, il comporte une face longitudinale sensiblement plane ; dans l'exemple représenté, il s'agit de la face non visible sur la figure 6, opposée à la face longitudinale sur laquelle est agencé le manchon d'entrée 124. De plus, sa face supérieure comporte, dans sa partie la plus éloignée du manchon de sortie 126, une excroissance 128. Cette excroissance comporte, du côté manchon de sortie 126, une pente douce 128A et, du côté opposé, une pente à crans 128B. En outre, la face inférieure du carter 120 comporte un rail longitudinal 130 d'épaisseur continûment décroissante en se rapprochant du côté du manchon de sortie 126.

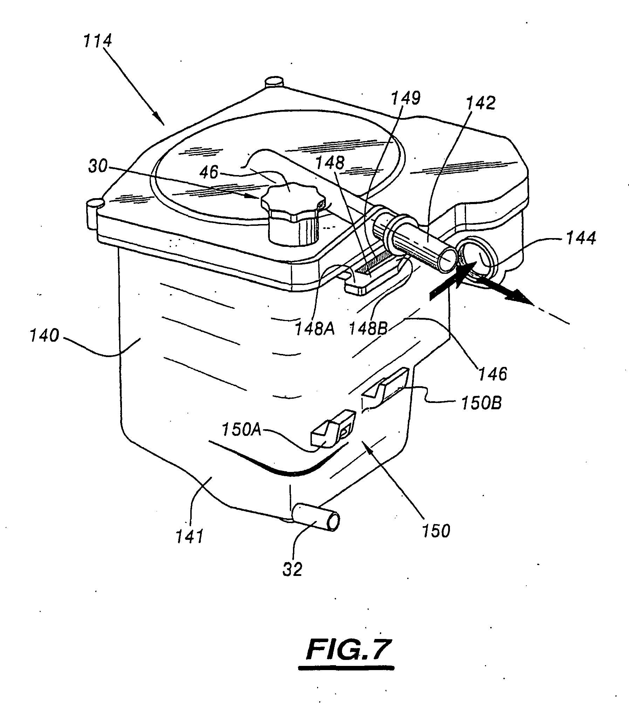

Sur la figure 7 est détaillé l'ensemble de filtrage 114. Ce dernier comporte un carter 140 de forme générale sensiblement parallélépipédique délimitant intérieurement une chambre, non visible sur les figures, de filtrage du gazole. A cet effet, l'ensemble 114 comporte intérieurement des moyens filtrant, tels que du papier, une maille de Nylon, etc...qui sont connus en eux-mêmes. Ces moyens permettent à la fois de retenir l'eau en émulsion que contient le gazole en l'évacuant dans une cuvette 141 de collecte analogue à la cuvette 22 décrite en regard des figures 1 à 4, et de retenir d'éventuelles impuretés solides présentes dans le gazole. Une fois ces moyens filtrant saturés, il convient de changer l'intégralité de l'ensemble de filtrage 114 par un ensemble neuf.

En plus de l'ensemble de purge 30 et des aménagements correspondants de son carter 140, l'ensemble 114 comporte extérieurement un manchon 142 de sortie du gazole épuré. De plus, un orifice tubulaire 144 est ménagé dans la paroi du carter 140 de façon à recevoir le manchon de sortie 126 de l'ensemble de chauffage 110.

Le carter 140 de l'ensemble de filtrage 114 est constitué d'une matière plastique sensiblement analogue à celle du carter 120 de l'ensemble de chauffage 110. Par complémentarité de forme, le carter 140 est adapté pour supporter et maintenir en place, de façon amovible, le carter 120. A cet effet, le carter 140 présente extérieurement une surface 146 sensiblement plane et de dimensions sensiblement complémentaires à celles de la face longitudinale plane précitée du carter 120. De plus, le carter 140 comporte une patte 148, ménageant une fente 149 de réception de l'excroissance 128 du carter 120. La patte 148 est reliée au carter par deux branches 148A, 148B dont au moins la branche 148A est sécable, par exemple au moyen d'un dimensionnement adéquat. Par ailleurs, le carter 140 comporte une glissière 150 de coulissement du rail longitudinal 130 du carter 120. Sur l'exemple représenté, la glissière comporte deux parties 150A et 150B, la partie 150A sensiblement en regard de la branche 148A étant de structure plus renforcée que la seconde partie 150B.

L'assemblage du carter 120 de l'ensemble de chauffage 110 sur le carter 140 de l'ensemble de filtrage 114 s'effectue de la façon suivante :

L'ensemble de chauffage 110 est d'abord positionné par rapport à l'ensemble de filtrage 114 de sorte que la surface 146 du carter 140 affleure sensiblement la face longitudinale plane précitée du carter 120. Puis, par un mouvement de translation de l'ensemble de chauffage 110 par rapport à l'ensemble de filtrage 114, le rail longitudinal 130 du carter 120, guidé par la glissière 150 du carter 140, amène le manchon de sortie 126 du carter 120 à pénétrer l'orifice tubulaire 144 du carter 140. Ce mouvement de translation se poursuit jusqu'à ce que l'excroissance 128, qui a préalablement soulevé de la patte 148 à la fois au moyen de sa pente douce 128A et sous l'effet de soulèvement du carter 120 par rapport au carter 140 généré par l'épaisseur croissante du rail 130, se loge à l'intérieur de la fente 149.

La branche arrière 148A, par rapport au sens du mouvement de translation précédent, de la patte 148 se trouve ainsi en prise avec un cran de la pente à crans 128B de l'excroissance 128, empêchant alors l'ensemble 10 de se dégager de l'ensemble 114. L'excroissance 128 forme ainsi une cale de retenue en translation de l'ensemble de chauffage 110.

Les ensembles de chauffage 110 et de filtrage 114 coopèrent ainsi par complémentarité de forme de leurs carters respectifs 120 et 140, de sorte que le manchon 126 et l'orifice 144 forment des moyens de raccordement direct et étanche des chambres de chauffage et de filtrage.

Une fois le dispositif de filtration 106 assemblé comme décrit ci-dessus, son fonctionnement est le suivant.

Lors de l'entraînement du gazole dans une ligne basse pression dans laquelle est agencé le dispositif 106, le gazole pénètre dans l'ensemble de chauffage 110 où il est, si nécessaire, chauffé par le ou les éléments électriques chauffant précités. Le gazole quitte la chambre de chauffage de l'ensemble 110 en empruntant le manchon 126 de raccord entre les ensembles 110 et 114, et parvient ainsi directement dans la chambre de filtrage de l'ensemble 114. Il en ressort par le manchon de sortie 142 et emprunte le conduit d'évacuation 116, par exemple jusqu'à une pompe et un moteur diesel.

Le dispositif de filtration 106 est ainsi facile d'installation puisque, une fois les ensembles 110 et 114 fixés l'un à l'autre, il se raccorde à la ligne à la manière d'un unique élément de filtrage courant. La fixation de l'ensemble de chauffage sur l'ensemble de filtrage s'effectue quant à elle par un unique mouvement de translation de l'un par rapport à l'autre. Les joints toriques 127 assurent une bonne étanchéité du raccordement entre les deux ensembles, même en présence de vibrations et/ou d'un léger désaxage entre le manchon 126 et l'orifice de réception 144.

Dans la mesure où le manchon 126 et l'orifice 144 raccordent les chambres de chauffage et de filtrage de façon directe, le gazole chauffé ne subit sensiblement aucune perte calorifique durant son transfert de la chambre de chauffage à la chambre de filtrage, augmentant par ailleurs les performances de filtration de l'ensemble 114.

Lorsqu'il est nécessaire de purger l'eau retenue dans la cuvette de collecte 141, le fonctionnement de l'ensemble de purge 30 est analogue à celui décrit précédemment en regard des figures 2 à 4.

De plus, lorsque l'ensemble de filtrage est saturé et prêt à être jeté pour être remplacé par un ensemble de filtrage neuf, il suffit de couper la branche 148A de la patte 148. La rupture de la patte au niveau de sa partie sécable 148A libère la cale 128 et permet de dégager l'ensemble de chauffage 110 par un mouvement de translation de sens opposé à celui nécessaire pour fixer l'ensemble de chauffage sur celui de filtrage. L'ensemble de chauffage 110 est prévu pour avoir une durée de vie plus longue que celle de l'ensemble de filtrage 114, de sorte qu'il est réutilisable avec plusieurs ensembles de filtrage successifs. Ces opérations de maintenance présentent en outre l'avantage d'être propres, puisque aucun des carters des ensembles n'est à ouvrir. De plus, un ensemble de filtrage à patte brisée porte une marque visuelle manifeste qu'il a déjà été utilisé et ne peut plus maintenir en place d'ensemble de chauffage.

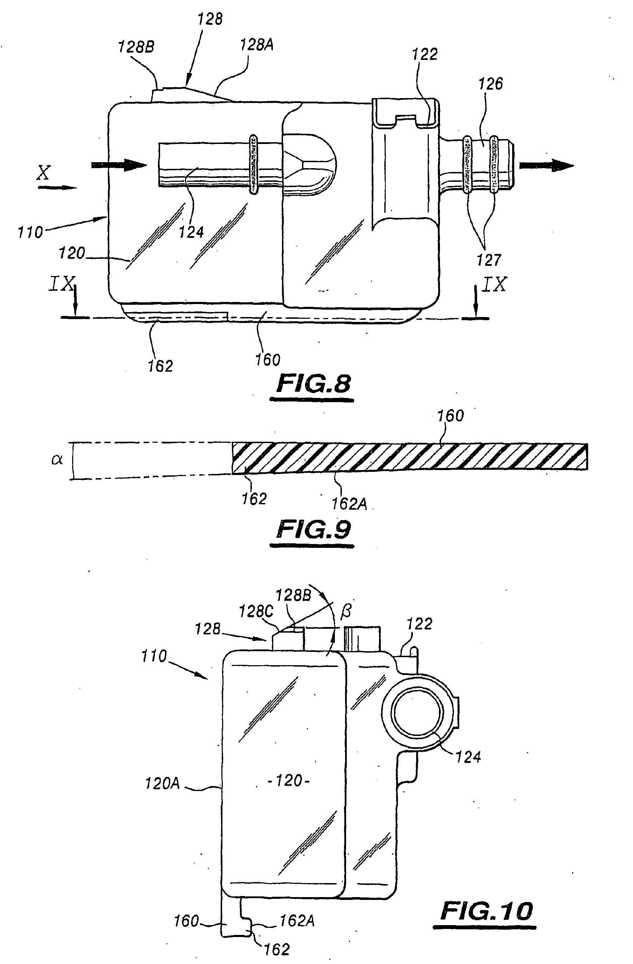

Sur les figures 8 à 10 est représentée une variante de l'ensemble 110 de chauffage de gazole du dispositif de filtration 106 selon l'invention. L'ensemble 110 des figures 8 à 10 ne se distingue de celui des figures 5 et 6 que par ce qui suit.

En plus de la face longitudinale plane précitée, visible sur la figure 10 et référencée 120A, le carter 120 de cet ensemble de chauffage 110 comporte un rail longitudinal inférieur 160 adapté pour coulisser, de la même façon que le rail 130 des figures 5 et 6, dans la glissière 150 du carter 140 de l'ensemble de filtrage 114. A la différence du rail 130 précité, le rail 160 est d'épaisseur sensiblement constante et comporte une excroissance 162 ménagée sur la partie du rail la plus éloignée du manchon 126. Cette excroissance est avantageusement réalisée d'un seul tenant avec le reste du rail 160. La face 162A, dirigée à l'opposé de la face 120A, de l'excroissance 162 forme un angle, noté α, par rapport à la direction longitudinal du rail 160, comme représenté sur la figure 9. Cet angle α est par exemple de l'ordre de quelques degrés.

De plus, l'excroissance 128 de cette variante de l'ensemble de chauffage comporte un seul cran 128B. La face 128C de l'excroissance, destinée à être tournée vers l'ensemble de filtrage 114 forme un angle inférieur à 90° avec la face supérieure sensiblement plane de l'excroissance 128. Cet angle est noté β sur la figure 10 et vaut avantageusement 30°.

L'assemblage du carter 120 de l'ensemble de chauffage 110, qui vient d'être décrit, sur le carter 140 de l'ensemble de filtrage 114 s'effectue sensiblement comme décrit à propos des figures 5 à 7.

Lors du mouvement de translation de l'ensemble de chauffage 110 par rapport à l'ensemble de filtrage 114, le rail inférieur 160 du carter 120 est guidé par la glissière 150 du carter 140. Au fur et à mesure que l'excroissance 162, formant ainsi rampe, est introduite dans la partie renforcée 150A de la glissière 150, cette excroissance 162 amène le carter 120 à se décaler transversalement vers le carter 140.

De façon sensiblement concomitante, la pente douce 128A de l'excroissance 128 soulève la patte 148 jusqu'à ce que l'excroissance 128 se loge à l'intérieur de la fente 148 délimitant le bord de la fente 149 vient en appui sur la face inclinée 128C de l'excroissance 128, formant alors une rampe à même de décaler transversalement le carter 120 en l'éloignant du carter 140.

La position transversale du carter 120 est fixée par combinaison des mouvements précités de décalage transversal à la fois de la partie inférieure du carter 120 vers le carter 140 et de la partie supérieure du carter 120 dans le sens opposé.

Une fois les ensembles de chauffage 110 et de filtrage 114 assemblés, le carter 120 est d'une part retenu en translation par rapport au carter 140, comme pour le mode de réalisation des figures 5 à 7, et d'autre part retenu transversalement à la direction de translation par rapport au carter 140.

Le dispositif de filtration décrit en regard des figures 8 à 10 présente l'avantage d'être plus robuste, ses moyens de fixation possédant une meilleure tenue mécanique en vibration.

Diverses variantes de réalisation de cette variante du dispositif de filtration selon l'invention sont envisageables dans la mesure où, bien que disposant de carters totalement distincts, c'est-à-dire ne possédant pas de paroi commune, mais de formes sensiblement complémentaires, l'ensemble de chauffage et l'ensemble de filtrage sont raccordés directement et de façon étanche l'un à l'autre, par exemple par un manchon court solidaire de l'un des deux ensembles et essentiellement logé dans la chambre intérieure de l'autre de ces ensembles.

Aussi, des formes diverses de carters sont possibles, afin d'obtenir fonctionnellement un dispositif de filtration intégré dont les carters respectifs des ensembles de chauffage et de filtrage coopèrent par complémentarité de forme, tel que décrit en regard des figures 5 à 10.

De même, les moyens de fixation de l'ensemble de chauffage sur l'ensemble de filtrage sont transposables, sans sortir du cadre de l'invention, en des moyens de fixation de l'ensemble de filtrage sur l'ensemble de chauffage. Par exemple, le rail de coulissement peut être agencé sur le carter de l'ensemble de filtrage et la glissière associée est alors agencée sur le carter de l'ensemble de chauffage.

## Revendications

1. Dispositif de filtration à ensemble de purge amélioré, du type comportant un ensemble de filtrage (7 ; 114) qui comprend un carter étanche (10 ; 140) délimitant intérieurement une chambre de filtrage pourvue de moyens de filtrage (12) et, dans sa partie inférieure, une cuvette (22 ; 141) de collecte d'un liquide résiduaire issu des moyens de filtrage, et un ensemble (30) de purge du liquide résiduaire qui comprend, d'une part, des moyens d'évacuation du liquide collecté dans la cuvette, comportant un orifice (36) ménagé dans la paroi du carter sensiblement au niveau du fond de la cuvette (22 ; 141) de collecte du liquide, et des moyens de mise à l'air libre du carter, comportant un orifice (34) ménagé dans la paroi (35) du carter (10 ; 140) sensiblement en regard de l'orifice d'évacuation du liquide (36), les moyens de mise à l'air libre et les moyens d'évacuation du liquide comportant en outre un unique obturateur (40) déplaçable entre une position d'étanchéité (figure 3), dans laquelle il bouche les orifices d'entrée d'air (34) et d'évacuation du liquide (36), et une position de purge gravitaire (figure 4), dans laquelle il est dégagé des orifices d'entrée d'air (34) et d'évacuation du liquide (36) permettant au liquide d'être évacué sous l'effet de la gravité, **caractérisé en ce que** l'orifice de mise à l'air libre (34) et l'orifice d'évacuation du liquide (36) sont sensiblement coaxiaux et **en ce que** l'unique obturateur est sous la forme d'une tige (40) comportant :
- une partie supérieure (42) qui, lorsque la tige d'obturation est dans sa position d'étanchéité, forme un bouchon étanche pour l'orifice de mise à l'air libre (34) et qui, lorsque la tige d'obturation est dans sa position de purge, est dégagée dudit orifice de mise à l'air libre,
- une partie inférieure (48) qui, lorsque la tige d'obturation est dans sa position d'étanchéité, forme un bouchon étanche pour l'orifice d'évacuation du liquide (36) et qui, lorsque la tige d'obturation est dans sa position de purge, est dégagée dudit orifice d'évacuation du liquide, et
- une partie courante (56) de rattrapage d'un jeu d'alignement des axes respectifs des orifices de mise à l'air libre (34) et d'évacuation du liquide (36).

2. Dispositif suivant la revendication 1, **caractérisé en ce que** l'orifice de mise à l'air libre (34) est délimité par une surface sensiblement cylindrique d'étanchéité (34B), et la partie supérieure (42) de la tige d'obturation (40) comporte un joint torique d'étanchéité (44) coopérant avec ladite surface d'étanchéité (34B) lorsque la tige (40) est en position d'étanchéité.

3. Dispositif suivant l'une des revendications 1 ou 2, **caractérisé en ce que** l'orifice d'évacuation du liquide (36) est délimité par une surface sensiblement cylindrique d'étanchéité (36A), et la partie inférieure (48) de la tige d'obturation (40) comporte un joint torique d'étanchéité (50) coopérant avec ladite surface d'étanchéité (36A) lorsque la tige (40) est en position d'étanchéité.

4. Dispositif suivant les revendications 2 et 3 prises ensemble, **caractérisé en ce que** la surface d'étanchéité (34B) de l'orifice de mise à l'air libre (34) est longitudinalement plus étendue que celle (36A) de l'orifice d'évacuation du liquide (36).

5. Dispositif suivant l'une quelconque des revendications précédentes, **caractérisé en ce que** l'orifice de mise à l'air libre (34) est fileté, et la partie supérieure (42) de la tige d'obturation (40) est filetée pour coopérer avec l'orifice de mise à l'air libre lorsque la tige (40) est en position d'étanchéité.

6. Dispositif suivant la revendication 5, **caractérisé en ce que** la tige d'obturation (40) comporte, à une de ses extrémités, une tête (46) de vissage-dévissage de la tige.

7. Dispositif suivant la revendication 6, **caractérisé en ce que** la tige d'obturation (40) comporte, à son extrémité opposée à celle comportant ladite tête (46), une surface (52) sensiblement plate d'appui sur une surface complémentaire (54) du carter (10 ; 141).

8. Dispositif suivant l'une quelconque des revendications précédentes, **caractérisé en ce que** ladite partie courante (56) de la tige d'obturation (40) est constituée d'un matériau souple.

9. Dispositif suivant l'une quelconques des revendications précédentes, **caractérisé en ce que** la partie courante (56) de la tige d'obturation (40) est de structure flexible.

10. Dispositif suivant la revendication 9, **caractérisé en ce que** la partie courante (56) de la tige d'obturation (40) se présente sous la forme d'un croisillon plein de section transversale plus petite que celle du reste de la tige.

11. Dispositif suivant l'une quelconque des revendications précédentes, **caractérisé en ce que** les moyens d'évacuation du liquide comportent un conduit d'écoulement (32) du liquide raccordé à l'orifice d'évacuation du liquide (36) et solidaire du carter (10 ; 140).

12. Dispositif suivant l'une quelconque des revendications précédentes, **caractérisé en ce que** l'ensemble de filtrage (7 ; 114) comporte des moyens (12) de filtrage de gazole, adaptés pour retenir l'eau en émulsion dans le gazole qui les traverse.

13. Dispositif suivant la revendication 12, **caractérisé en ce qu'**il comporte un ensemble (110) de chauffage électrique qui comprend un carter (120) délimitant intérieurement une chambre de chauffage du gazole à filtrer, et des moyens (126, 144) de raccordement direct et étanche des chambres des ensembles de chauffage (110) et de filtrage (114), et **en ce qu'**il comporte des moyens d'assemblage des carters (120, 140) desdits ensembles (110, 114).

14. Dispositif suivant la revendication 13, **caractérisé en ce que** les moyens de raccordement comportent un manchon (126) solidaire du carter (120) de l'un (110) des ensembles de chauffage et de filtrage, et un orifice (144) de réception dudit manchon (126) ménagé dans la paroi du carter (140) de l'autre (114) desdits ensembles.

15. Dispositif suivant la revendication 14, **caractérisé en ce que** le manchon (126) et le carter (120) duquel il est solidaire forment une pièce d'un seul tenant.

16. Dispositif suivant l'une quelconque des revendications 14 ou 15, **caractérisé en ce que** les moyens de raccordement (126, 144) sont munis de moyens d'étanchéité (127).

17. Dispositif suivant l'une des revendications 13 à 16, **caractérisé en ce que** les moyens d'assemblage comportent des moyens de fixation amovible du carter (120) de l'un (110) des ensembles de chauffage et de filtrage sur le carter (140) de l'autre (114) desdits ensembles, les carters desdits ensembles coopérant par complémentarité de forme.

18. Dispositif suivant la revendication 17, **caractérisé en ce que** les moyens de fixation comportent une liaison coulissante à glissière (130, 150) entre l'ensemble de chauffage (110) et l'ensemble de filtrage (114), et des moyens (128, 148) de retenue en translation d'un desdits ensembles (110, 114) par rapport à l'autre.

19. Dispositif suivant la revendication 18, **caractérisé en ce que** la liaison à glissière (130, 150) ménage une rampe (130) inclinée de coulissement de l'un desdits ensembles (110, 114) sur l'autre.

20. Dispositif suivant les revendications 18 ou 19, **caractérisé en ce que** les moyens de retenue en translation comportent une cale (128) solidaire du carter (120) de l'un desdits ensembles, et une patte (148) solidaire du carter (140) de l'autre desdits ensembles, disposée transversalement à la direction de translation et adaptée pour retenir en translation la cale (128) lorsque les carters (120, 140) desdits ensembles sont fixés l'un à l'autre.

21. Dispositif suivant la revendication 20, **caractérisé en ce que** sur la face (128B) de la cale (128) en appui sur la patte (148) lorsque les carters (120, 140) desdits ensembles sont fixés l'un à l'autre, est ménagé au moins un cran de retenue.

22. Dispositif suivant la revendications 20 ou 21, **caractérisé en ce que** la cale (128) comporte une face inclinée (128A) de dégagement de la patte (148) lors du mouvement de fixation de l'ensemble de chauffage (110) sur l'ensemble de filtrage (114).

23. Dispositif suivant l'une quelconque des revendications 20 à 22, **caractérisé en ce que** la patte (148) comporte une partie sécable (148A).

24. Dispositif suivant la revendication 23, **caractérisé en ce que** l'ensemble de chauffage (110) est à durée de vie plus longue que celle de l'ensemble de filtrage (114), un même ensemble de chauffage étant adapté pour être raccordé successivement dans le temps à plusieurs ensembles de filtrage.

25. Dispositif suivant l'une quelconque des revendications 17 à 24, **caractérisé en ce que** les moyens de fixation comportent des moyens (128C, 162) de retenue suivant une direction transversale à la direction de translation d'un desdits ensembles (110, 114) par rapport à l'autre.

26. Dispositif suivant la revendication 25, **caractérisé en ce que** les moyens de retenue transversale comportent deux rampes (128C, 162) de décalage transversal de l'un desdits ensembles (110, 114) par rapport à l'autre, les sens respectifs de décalage transversal desdites deux rampes étant opposés.

27. Ligne d'alimentation en gazole, notamment d'un moteur diesel, du type basse pression et comportant un réservoir (4), un dispositif de filtration (6, 106) et une pompe à gazole (8), **caractérisé en ce que** le dispositif de filtration (6, 106) est réalisé suivant l'une quelconque des revendications 1 à 26.

## Claims

1. A filtering device with an improved purging assembly, of the type comprising a filtering unit (7;114) which comprises a fluidtight housing (10;140) internally delimiting a filtering chamber provided with filtering means (12) and, in its lower part, a collecting bowl (22;141) for residual liquid originating from the filtering means, and a purging assembly (30) for the residual liquid, which comprises, on the one hand, means for discharging the liquid collected in the bowl, comprising an orifice (36) provided in the housing wall substantially level with the bottom of the liquid-collecting bowl (22;141), and means for venting the housing, comprising an orifice (34) provided in the wall (35) of the housing (10;140) substantially opposite the liquid-discharge orifice (36), the venting means and the liquid-discharge means further comprising a single closure means (40) which can move between a sealing position (Figure 3), in which it closes the air-inlet orifice (34) and the liquid-discharge orifice (36), and a gravity purge position (Figure 4), in which it is clear of the air-inlet orifice (34) and the liquid-discharge orifice (36) so as to allow the liquid to be discharged under the action of gravity, **characterised in that** the venting orifice (34) and the liquid-discharge orifice (36) are substantially coaxial, and **in that** the single closure means is in the form of a stem (40) comprising:
- an upper part (42) which, when the closure stem is in its sealing position, forms a fluidtight closure for the venting orifice (34) and which, when the closure stem is in its purge position, is clear of said venting orifice,
- a lower part (48) which, when the closure stem is in its sealing position, forms a fluidtight closure for the liquid-discharge orifice (36) and which, when the closure stem is in its purge position, is clear of said liquid-discharge orifice, and
- a common part (56) for taking up any alignment play in the respective axes of the venting orifice (34) and liquid-discharge orifice (36).

2. A device according to claim 1, **characterised in that** the venting orifice (34) is delimited by a substantially cylindrical sealing surface (34B), and the upper part (42) of the closure stem (40) comprises an O-ring seal (44) co-operating with said sealing surface (34B) when the stem (40) is in its sealing position.

3. A device according to either claim 1 or claim 2, **characterised in that** the liquid-discharge orifice (36) is delimited by a substantially cylindrical sealing surface (36A), and the lower part (48) of the closure stem (40) comprises an O-ring seal (50) co-operating with said sealing surface (36A) when the stem (40) is in its sealing position.

4. A device according to claims 2 and 3 taken together, **characterised in that** the sealing surface (34B) of the venting orifice (34) extends longitudinally to a greater extent than the surface (36A) of the liquid-discharge orifice (36).

5. A device according to any one of the preceding claims, **characterised in that** the venting orifice (34) is threaded and the upper part (42) of the closure stem (40) is threaded so as to co-operate with the venting orifice when the stem (40) is in its sealing position.

6. A device according to claim 5, **characterised in that** the closure stem (40) comprises, at one of its ends, a head (46) for screwing up and unscrewing the stem.

7. A device according to claim 6, **characterised in that** the closure stem (40) comprises, at its end opposite that comprising said head (46), a substantially flat surface (52) bearing on a complementary surface (54) of the housing (10;141).

8. A device according to any one of the preceding claims, **characterised in that** said common part (56) of the closure stem (40) is made of a flexible material.

9. A device according to any one of the preceding claims, **characterised in that** the common part (56) of the closure stem (40) is of flexible structure.

10. A device according to claim 9, **characterised in that** the common part (56) of the closure stem (40) is provided in the form of a solid cross piece of smaller cross-section than that of the remainder of the stem.

11. A device according to any one of the preceding claims, **characterised in that** the liquid-discharge means comprise an outflow pipe (32) for liquid connected to the liquid-discharge orifice (36) and integral with the housing (10;140).

12. A device according to any one of the preceding claims, **characterised in that** filtering unit (7;114) comprises gas-oil filtering means (12) which are designed to retain water in emulsion in the gas oil passing through said means.

13. A device according to claim 12, **characterised in that** it comprises an electric heating unit (110) which comprises a housing (120) defining internally a heating chamber for the gas oil to be filtered, and means (126,144) for direct and fluidtight connection of the chambers of the heating unit (110) and filtering unit (114), and **in that** it comprises means for joining the housings (120,140) of said units (110,114).

14. A device according to claim 13, **characterised in that** said connecting means comprise a sleeve (126) attached to the housing (120) of one (110) of the heating and filtering units, and a receiving orifice (144) for said sleeve (126) provided in the wall of the housing (140) of the other one (114) of said units.

15. A device according to claim 14, **characterised in that** the sleeve (126) and the housing (120), to which it is attached, form an integral part.

16. A device according to either claim 14 or claim 15, **characterised in that** the connecting means (126,144) are provided with sealing means (127).

17. A device according to any one of claims 13 to 16, **characterised in that** the joining means comprise means for detachably fastening the housing (120) of one (110) of said heating and filtering units to the housing (140) of the other one (114) of said units, the housings of said units co-operating owing to their complementary shape.

18. A device according to claim 17, **characterised in that** the fastening means comprise a sliding guide coupling (130,150) between the heating unit (110) and the filtering unit (114), and means (128,148) for preventing displacement of one of said units (110,114) relative to the other.

19. A device according to claim 18, **characterised in that** the guide coupling (130,150) provides an inclined ramp (130) for one of said units (110,114) to slide on the other.

20. A device according to claim 18 or 19, **characterised in that** the means for preventing displacement comprise a wedge (128) attached to the housing (120) of one of the said units, and a lug (148) which is attached to the housing (140) of the other one of said units and which is disposed transversely to the direction of displacement and intended to prevent displacement of the wedge (128) when the housings (120,140) of said units are fastened to one another.

21. A device according to claim 20, **characterised in that** at least one locating notch is provided on the surface (128B) of the wedge (128) bearing on the lug (148) when the housings (120,140) of said units are fastened to one another.

22. A device according to claim 20 or 21, **characterised in that** the wedge (128) comprises an inclined surface (128A) for disengagement from the lug (148) during the movement for fastening the heating unit (110) to the filtering unit (114).

23. A device according to any one of claims 20 to 22, **characterised in that** the lug (148) comprises a portion (148A) which can be cut off.

24. A device according to claim 23, **characterised in that** the heating unit (110) has a longer service life than that of the filtering unit (114), the same heating unit being designed to be connected successively to a number of filtering units over a period of time.

25. A device according to any one of claims 17 to 24, **characterised in that** the fastening means comprise means (128C,162) for location in a transverse direction to the direction of displacement of one of said units (110,114) relative to the other.

26. A device according to claim 25, **characterised in that** the transverse locating means comprise two ramps (128C,162) for shifting one of said units (110,114) transversely relative to the other, the respective directions in which said two ramps are shifted transversely being opposed.

27. A gas-oil supply line, in particular for a diesel engine, of the low-compression type and comprising a tank (4), a filtering device (6,106) and a gas-oil pump (8), **characterised in that** the filtering device (6,106) is designed in accordance with any one of claims 1 to 26.

## Patentansprüche

1. Filterungsvorrichtung mit verbesserter Entleerungsbaueinheit des Typs, der umfasst: eine Filterungsbaueinheit (7; 114), die einen dichten Behälter (10; 140) aufweist, der in sich eine mit Filtermitteln (12) versehene Filterkammer und in seinem unteren Teil eine Schale (22; 141) zum Sammeln einer von den Filtermitteln stammenden Restflüssigkeit begrenzt, und eine Baueinheit (30) zum Entleeren der Restflüssigkeit, die einerseits Mittel zum Abführen von in der Schale gesammelter Flüssigkeit, die eine Öffnung aufweisen, die in der Wand des Behälters im Wesentlichen auf Höhe des Bodens der Flüssigkeitssammelschale (22; 141) vorgesehen ist, und andererseits Lüftungsmittel für den Behälter, die eine Öffnung (34) aufweisen, die in der Wand (35) des Behälters (10; 140) im Wesentlichen gegenüber der Flüssigkeitsentleerungsöffnung (36) vorgesehen ist, umfasst, wobei die Lüftungsmittel und die Flüssigkeitsentleerungsmittel außerdem einen einzigen Verschluss (40) aufweisen, der zwischen einer Dichtungsposition (Fig. 3), in der er in der Lufteintrittsöffnung (34) und in der Flüssigkeitsentleerungsöffnung (36) steckt, und einer Schwerkraftentleerungsposition (Fig. 4), in der er von der Lufteintrittsöffnung (34) und von der Flüssigkeitsentleerungsöffnung (36) getrennt ist und der Flüssigkeit ermöglicht, unter der Wirkung der Schwerkraft entleert zu werden, verlagerbar ist, **dadurch gekennzeichnet, dass** die Lüftungsöffnung (34) und die Flüssigkeitsentleerungsöffnung (36) im Wesentlichen koaxial sind und dass der einzige Verschluss die Form eines Stifts (40) hat, der umfasst:
- einen oberen Teil (42), der dann, wenn der Verschlussstift in seiner Dichtungsposition ist, einen dichten Stopfen für die Lüftungsöffnung (34) bildet und der dann, wenn sich der Verschlussstift in seiner Entleerungsposition befindet, von der Lüftungsöffnung getrennt ist,
- einen unteren Teil (48), der dann, wenn der Verschlussstift in seiner Dichtungsposition ist, einen dichten Stopfen für die Flüssigkeitsentleerungsöffnung (36) bildet und der dann, wenn sich der Verschlussstift in seiner Entleerungsposition befindet, von der Flüssigkeitsentleerungsöffnung getrennt ist, und
- einen Strömungsteil (56) für die Kompensation eines Ausrichtungsspiels der Achsen der Lüftungsöffnung (34) bzw. der Flüssigkeitsentleerungsöffnung (36).

2. Vorrichtung nach Anspruch 1, **dadurch gekennzeichnet, dass** die Lüftungsöffnung (34) durch eine im Wesentlichen zylindrische Dichtungsoberfläche (34B) begrenzt ist und der obere Teil (42) des Verschlussstifts (40) eine torische Dichtung (44) aufweist, die mit der Dichtungsoberfläche (34B) zusammenwirkt, wenn sich der Stift (40) in der Dichtungsposition befindet.

3. Vorrichtung nach einem der Ansprüche 1 oder 2, **dadurch gekennzeichnet, dass** die Flüssigkeitsentleerungsöffnung (36) durch eine im Wesentlichen zylindrische Dichtungsoberfläche (36A) begrenzt ist und der untere Teil (48) des Verschlussstifts (40) eine torische Dichtung (50) aufweist, die mit der Dichtungsoberfläche (36A) zusammenwirkt, wenn sich der Stift (40) in der Dichtungsposition befindet.

4. Vorrichtung nach Anspruch 2 und nach Anspruch 3, **dadurch gekennzeichnet, dass** die Dichtungsoberfläche (36B) der Lüftungsöffnung (34) longitudinal weiter ausgedehnt ist als jene (36A) der Flüssigkeitsentleerungsöffnung (36).

5. Vorrichtung nach einem der vorhergehenden Ansprüche, **dadurch gekennzeichnet, dass** die Lüftungsöffnung (34) mit einem Gewinde versehen ist und dass der obere Teil (42) des Verschlussstifts (40) mit einem Gewinde versehen ist, um mit der Lüftungsöffnung zusammenzuwirken, wenn sich der Stift (40) in der Dichtungsposition befindet.

6. Vorrichtung nach Anspruch 5, **dadurch gekennzeichnet, dass** der Verschlussstift (40) an einem seiner Enden einen Kopf (46) zum Einschrauben/Herausschrauben des Stifts aufweist.

7. Vorrichtung nach Anspruch 6, **dadurch gekennzeichnet, dass** der Verschlussstift (40) an seinem Ende, das jenem gegenüberliegt, das den Kopf (46) aufweist, eine im Wesentlichen ebene Oberfläche (52) aufweist, um sich auf einer komplementären Oberfläche (54) des Behälters (10; 141) abzustützen.

8. Vorrichtung nach einem der vorhergehenden Ansprüche, **dadurch gekennzeichnet, dass** der Strömungsteil (56) des Verschlussstifts (40) aus einem nachgiebigen Material gebildet ist.

9. Vorrichtung nach einem der vorhergehenden Ansprüche, **dadurch gekennzeichnet, dass** der Strömungsteil (56) des Verschlussstifts (40) eine biegsame Struktur hat.

10. Vorrichtung nach Anspruch 9, **dadurch gekennzeichnet, dass** der Strömungsteil (46) des Verschlussstifts (40) die Form eines Vollkreuzarms mit einem transversalen Querschnitt, der kleiner als jener des restlichen Stifts ist, aufweist.

11. Vorrichtung nach einem der vorhergehenden Ansprüche, **dadurch gekennzeichnet, dass** die Flüssigkeitsentleerungsmittel eine Flüssigkeitsablaufleitung (32) aufweisen, die mit der Flüssigkeitsentleerungsöffnung (36) verbunden und an dem Behälter (10; 140) befestigt ist.

12. Vorrichtung nach einem der vorhergehenden Ansprüche, **dadurch gekennzeichnet, dass** die Filterungsbaueinheit (7; 114) Dieselölfilterungsmittel (12) aufweist, die so beschaffen sind, dass sie das Wasser in Emulsion in dem Dieselöl, durch das sie verlaufen, halten können.

13. Vorrichtung nach Anspruch 12, **dadurch gekennzeichnet, dass** sie eine elektrische Heizbaueinheit (110), die einen Behälter (120) aufweist, der innen eine Heizkammer für das zu filternde Dieselöl begrenzt, und Mittel (126, 140) zum direkten und dichten Verbinden der Kammern der Heizbaueinheit (110) bzw. der Filterungsbaueinheit (114) umfasst und dass sie Mittel zum Zusammenfügen der Behälter (110, 140) der Baueinheiten (110, 114) umfasst.

14. Vorrichtung nach Anspruch 13, **dadurch gekennzeichnet, dass** die Verbindungsmittel eine mit dem Behälter (120) einer (110) der Heiz- und Filterungsbaueinheiten fest verbundene Muffe (126) sowie eine Öffnung (144) für die Aufnahme der Muffe (126), die in der Wand des Behälters (140) der anderen (114) der Baueinheiten ausgespart ist, umfassen.

15. Vorrichtung nach Anspruch 14, **dadurch gekennzeichnet, dass** die Muffe (126) und der Behälter (120), mit dem sie fest verbunden ist, ein einziges Teil bilden.

16. Vorrichtung nach einem der Ansprüche 14 oder 15, **dadurch gekennzeichnet, dass** die Verbindungsmittel (126, 144) mit Dichtungsmitteln (127) versehen sind.

17. Vorrichtung nach einem der Ansprüche 13 bis 16, **dadurch gekennzeichnet, dass** die Zusammenfügungsmittel Mittel zum lösbaren Befestigen des Behälters (120) einer (110) der Heiz- und Filterungsbaueinheiten an dem Behälter (140) der anderen (114) der Baueinheiten umfassen, wobei die Behälter dieser Baueinheiten durch Formkomplementarität zusammenwirken.

18. Vorrichtung nach Anspruch 17, **dadurch gekennzeichnet, dass** die Befestigungsmittel eine Gleitverbindung mit Gleitschiene (130, 150) zwischen der Heizbaueinheit (110) und der Filterungsbaueinheit (114) sowie Mittel (128, 148), die eine der Baueinheiten (110, 114) in Bezug auf die andere translatorisch festhalten, umfassen.

19. Vorrichtung nach Anspruch 18, **dadurch gekennzeichnet, dass** die Gleitschienenverbindung (130, 150) eine geneigte Rampe (110) zum Gleiten einer der Baueinheiten (110, 140) an der anderen vorsieht.

20. Vorrichtung nach den Ansprüche 18 oder 19, **dadurch gekennzeichnet, dass** die Mittel zum translatorischen Halten einen mit dem Behälter (120) einer der Baueinheiten fest verbundenen Keil (128) und einen mit dem Behälter (140) der anderen der Baueinheiten fest verbundenen Ansatz (148), der quer zur Translationsrichtung angeordnet und so beschaffen ist, dass er den Keil (128) translatorisch halten kann, wenn die Behälter (120, 140) dieser Baueinheiten aneinander befestigt sind, umfassen.

21. Vorrichtung nach Anspruch 20, **dadurch gekennzeichnet, dass** an der Fläche (128B) des Keils (128), die sich an dem Ansatz (148) abstützt, wenn die Behälter (120, 140) der Baueinheiten aneinander befestigt sind, wenigstens ein Haltezahn vorgesehen ist.

22. Vorrichtung nach Anspruch 20 oder 21, **dadurch gekennzeichnet, dass** der Keil (128) eine geneigte Fläche (128A) für die Lösung von dem Ansatz (148) bei der Bewegung für die Befestigung der Heizbaueinheit (110) an der Filterungsbaueinheit (114) umfasst.

23. Vorrichtung nach einem der Ansprüche 20 bis 22, **dadurch gekennzeichnet, dass** der Ansatz (148) einen teilbaren Abschnitt (148A) aufweist.

24. Vorrichtung nach Anspruch 23, **dadurch gekennzeichnet, dass** die Heizbaueinheit (110) eine längere Lebensdauer als die Filterungsbaueinheit (114) hat, wobei dieselbe Baueinheit zeitlich nacheinander mit mehreren Filterungsbaueinheiten verbunden werden kann.

25. Vorrichtung nach einem der Ansprüche 17 bis 24, **dadurch gekennzeichnet, dass** die Befestigungsmittel Mittel (128C, 162) umfassen, die die Baueinheiten (110, 114) relativ zueinander in einer Richtung quer zur Translationsrichtung halten.

26. Vorrichtung nach Anspruch 25, **dadurch gekennzeichnet, dass** die Transversalhaltemittel zwei Rampen (128C, 162) für die transversale Verlagerung einer der Baueinheiten (110, 114) in Bezug auf die andere aufweisen, wobei die jeweiligen transversalen Verlagerungsrichtungen der zwei Rampen zueinander entgegengesetzt sind.

27. Dieselölversorgungsleitung, insbesondere für einen Dieselmotor, des Niederdrucktyps, der einen Vorratsbehälter (4), eine Filterungsvorrichtung (6, 106) und eine Dieselölpumpe (108) umfasst, **dadurch gekennzeichnet, dass** die Filterungsvorrichtung (6, 106) gemäß einem der Ansprüche 1 bis 26 verwirklicht ist.
